# EUROPEAN PATENT APPLICATION

(11) **EP 1 650 363 A2**
(43) Date of publication of application: **26.04.2006**
(21) Application number: 05256494.5
(22) Date of filing: 20.10.2005
(51) Int. Cl.: E03C 1/12

(54) **Improved air vent**

(30) Priority: 20.10.2004 GB 0423231
(71) Applicant: McALPINE & COMPANY LIMITED, Hillington Glasgow G52 4LF Scotland (GB)
(72) Inventor: McAlpine, James Edward, McAlpine & Co. Ltd., Glasgow G52 4LF (GB)
(74) Representative: Shanks, Andrew

(57) **Abstract**

An air admittance valve for a plumbing drainage system includes a housing defining an interior space and having an air inlet for admitting air into the interior space. The housing is adapted to be connected to a plumbing drainage system, such that the interior space is in fluid communication with the plumbing drainage system.

The air admittance valve also includes an air pressure actuated seal element for selectively sealing the air inlet and guide means for guiding the seal element into engagement with the air inlet. The guide means is arranged, in normal use, below the seal element.

## Description

### FIELD OF THE INVENTION

This invention relates to air vents, and in particular to air admittance vents or valves for plumbing drainage systems.

### BACKGROUND OF THE INVENTION

Air circulation in plumbing drainage systems is essential for water sealed plumbing traps to work correctly. When a plumbing fixture, such as a sink or toilet, is used and water drains out of the system, negative pressure is created in the plumbing system which, in the absence of venting, would result in the siphonage of the water seal from the plumbing system traps, permitting sewer gases to enter the building.

Conventional air vents are simply pipes open to atmosphere. However, because these pipes are open, they have to be positioned on the exterior of the building to prevent sewer gases being released within the building. Penetrating the shell of the building to position the vent on the exterior can create problems, for example, the interface between the vent pipe and the building could leak, the vent could be damaged in adverse weather conditions, or the vent could get blocked by leaves or nesting animals.

These, and other problems, have been alleviated by the introduction of air admittance valves. These valves allow air to enter the plumbing drainage system through a one-way air valve provided with an annular valve element. When water flows through the pipes, a negative pressure differential is created between the pipework and the external atmosphere resulting in a force that acts on and lifts the annular valve element from its slot, admitting air into the system. When the flow stops and the pressure has equalised, the valve closes by gravity and prevents the escape of sewer gas from the plumbing system. If a positive pressure differential arises, that is the pressure inside the system is greater than the external atmosphere, the force generated by the pressure differential acts on the valve and prevents the valve from opening. As these valves are one-way valves and do not emit sewer gases, they can be installed inside a building and do need to penetrate the shell of the building.

Conventional air admittance valves have drawbacks however. For example the negative pressure differential in the pipework necessary to cause the traps to empty can be quite low and to incorporate the size of annular seal necessary to make the air admittance valve sufficiently responsive can result in the air admittance valve being physically bulky. This is undesirable where the air admittance valves are visible, for example where valves are on exposed pipework within a house or office block.

Furthermore, where a single air admittance valve is used for a whole building or system, the air admittance valve will most likely be positioned in a roof void at the highest point of the building. In such a situation it is common for the soil pipe, to which the valve is to be connected, to run close to the building's walls before terminating in the roof void. The conventional mushroom shaped air admittance valve does not lend itself to being fitted snugly against a wall and if the termination point is in the eaves of a house, a bulky valve will be difficult to locate and difficult to maintain if necessary.

A further disadvantage of conventional air admittance valves is that in cold weather the presence of ice may result in the annular valve element being held fixed in the sealed position. When the valve element is frozen in the sealed position in this manner, a significantly greater negative pressure differential than normal is required in the pipework to free the valve and equalise the pressure. The presence of a greater negative pressure may cause traps to empty before the valve is freed.

Some of these issues were addressed in the Applicant's earlier European patent EP 0059558. However, the relief valve described has a number of drawbacks. Firstly, for assembly, the relief valve has to be inverted. This makes maintenance of the relief valve awkward because it has to be removed from the sanitation system for re-assembly after maintenance. Secondly, the relief valve described has a reduced capacity over conventional relief valves.

Both conventional air admittance valves and the air admittance valve described in EP 0059558 have a further disadvantage, in that a whole range of sizes need to be manufactured to permit engagement with the various sizes of soil pipe which are commonly used.

An object of an embodiment of the present invention is to obviate or mitigate at least one of the aforementioned disadvantages.

### SUMMARY OF THE INVENTION

According to a first aspect of the present invention there is provided an air admittance valve for a plumbing drainage system, the air admittance valve including:
a housing defining an interior space and having an air inlet for admitting air into the interior space, the housing adapted to be connected to a plumbing drainage system, such that the interior space is in fluid communication with the plumbing drainage system;
an air pressure actuated seal element for selectively sealing the air inlet; and
guide means for guiding the seal element into engagement with the air inlet, the guide means being arranged, in normal use, below the seal element.

Locating the guide means such that the effect of gravity will draw the seal element towards the air inlet permits the air admittance valve to be assembled in situ, that is in the working orientation.

Preferably, the seal element has a continuous surface.

In the context of this application, continuous means non-apertured, that is the seal element has a non-apertured surface.

A seal element with a continuous surface has a greater surface area than an apertured seal element, for example an annular element, of the same external dimensions. A greater surface area means a given pressure differential will create a greater force on the seal element than would be created on an apertured seal element of the same external dimensions, giving a more responsive valve. Alternatively, if it is desired to provide a valve which opens in response to a predetermined differential pressure a smaller seal element and, hence smaller air admittance valve, can be used.

Preferably, the seal element seals the air inlet by means of a single seal interface. Having only a single seal interface is of great benefit if the valve has been frozen in the sealed position. The length and area of seal interface which has to be broken for the valve to operate is less than with an apertured seal element of the same external dimensions because, for example with an annular seal element, the seal interface around both the outer edge and the inner edge of the annulus may be frozen to the air intake. The reduced length of seal interface provided by the present invention means a lower differential pressure is necessary to break the frozen seal between the seal interface and the air intake, making the air admittance valve functional.

The single seal interface may be located around the periphery of the seal element.

The air inlet may be circular. If the air inlet is circular the seal element may be in the form of a disc.

The seal element may be normally closed by gravity. The seal element may, additionally be closed by a positive pressure differential, that is the pressure inside the air admittance valve is greater than the pressure outside.

The seal element may comprise a seal membrane sandwiched between an upper membrane support and a lower membrane support. Such an arrangement of the seal element permits the seal membrane to be cut from a flat sheet of material such as rubber, rather than being a rubber moulding. This has considerable advantages to the manufacturer, for example moulded membranes can be of variable quality and there is a high failure or scrap rate associated with moulding seals of sufficient quality to maintain a good seal.

The seal membrane and the upper and lower membrane supports may be in the form of disks. Sandwiching the seal membrane between disks assists in "ironing out" any imperfections in the rubber, so a completely flat sheet of rubber is not required to make a useable seal.

Conveniently the diameter of the seal membrane is greater than the diameter of the upper membrane support which in turn is greater than the diameter of the lower membrane support.

Preferably, the housing further comprises a body portion and a removable cap portion. A removable cap portion allows access to be provided to the interior space of the air admittance valve for maintenance.

Preferably the removable cap portion is secured to the body portion by means of a screw fit.

The air admittance valve may further include a housing seal to provide a seal between the removable cap and the body portion.

Preferably the housing seal is located on the upper surface of the body portion and engages the underside of the removable cap.

The housing seal may be in the form of an annular seal member mounted to a seal member support disc.

Preferably, as the removable cap is screwed into position on the body portion, the housing seal is compressed between the underside of the removable cap and an upper surface of the body portion forming a compression seal. Such a seal arrangement ensures that a seal is formed without the seal being rotated. This contrasts with the O-ring type seal used in the prior art where the o-ring rotates as the air admittance valve is assembled and it is easy to fit the seal incorrectly.

Preferably, the housing is adapted to be connected to a plumbing drainage system by means of a tubular portion having a longitudinal axis.

As plumbing pipework is conventionally tubular, a tubular connection will facilitate easy attachment to a conventional system.

Where the housing comprises a body portion, the tubular portion may be disconnectable from the body portion. Being able to disconnect the tubular portion from the body portion permits interchangeability of different sizes of tubular potion with a single size of body portion. This allows one size of body portion to be used with a number of different sizes of soil pipes.

Preferably the tubular portion is connected to the body portion by means of a snap fit. Alternatively, the body portion may be connected to the tubular portion by a threaded engagement or any other suitable means.

Preferably the centre of the seal element is located on the longitudinal axis of the body portion.

The axis of the tubular portion may coincide with the axis of the body portion or, alternatively the axis of the tubular portion may be spaced away from the axis of the body portion. Being able to offset the tubular portion with respect to the air inlet, permits many styles and designs of air admittance valves to be manufactured which are either aesthetically pleasing or capable of being fitted in a wide range of environments, such as tight against walls.

If the seal element is centralised or spaced away from the internal walls of the air admittance valve, condensation which may build up in the top of the air admittance valve will run down the internal surface of the air admittance valve past the seal element and into the soil pipe. This protects the seal element from a build up of condensation, which in cold weather can freeze the seal element in the sealed position. Therefore, an air admittance valve with a seal element spaced away from the internal walls can operate better in low temperatures without requiring any additional insulation.

The air inlet may include an external grill. A grill can prevent animals or debris entering the valve.

Preferably, the air admittance valve includes a pipe seal portion for location between the tubular portion and the plumbing system. Preferably, the pipe seal includes an elastomer collar, though in other embodiments the tubular portion may engage the pipework of the plumbing system via a screw thread fitting or the like.

According to a second aspect of the present invention there is provided a plumbing drainage system, the system comprising:
at least one soil pipe;
at least one plumbing fixture connected to the at least one soil pipe by means of a water filled trap seal; and
at least one air admittance valve connected to the soil pipe, the air admittance valve including:
   a housing defining an interior space and having an air inlet for admitting air into the interior space, the housing adapted to be connected to a plumbing drainage system, such that the interior space is in fluid communication with the plumbing drainage system;
   an air pressure actuated seal element for selectively sealing the air inlet, the seal element having a continuous surface; and
   guide means for assisting the seal element into sealing engagement with the air inlet, the guide means being located such that in normal use the effect of gravity will draw the seal element towards the guide means.

### BRIEF DESCRIPTION OF THE DRAWINGS

These and other aspects of the present invention will now be described by way of example only and with reference to the accompanying figures in which:
Figure 1 is a side view of an air admittance valve in accordance with an embodiment of the present invention;
Figure 2 is a side view of the air admittance valve of Figure 1 in a first disassembled configuration;
Figure 3 is a cross-sectional side view of the air admittance valve of Figure 1;
Figure 4 is a top view of the seal element of the air admittance valve of Figure 1 in a first disassembled configuration; and
Figure 5 is a perspective view of the air admittance valve of Figure 1 in a second disassembled configuration.

### DETAILED DESCRIPTION OF THE DRAWINGS

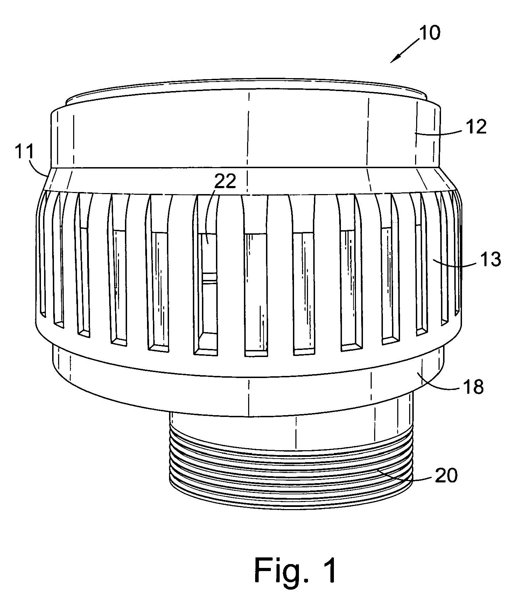

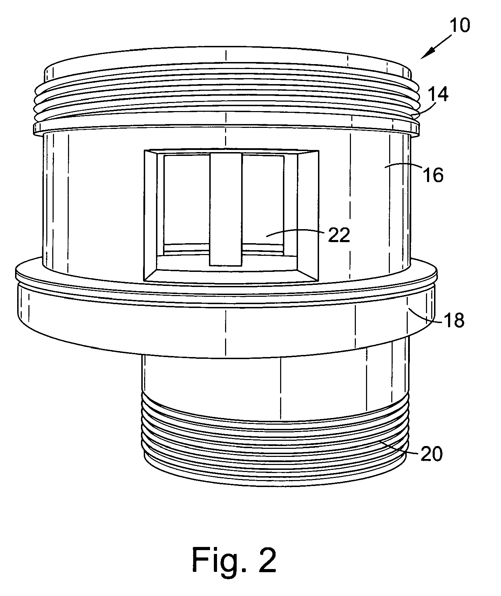

Referring firstly to Figures 1 and 2 there is shown a side view of an air admittance valve generally indicated by reference numeral 10 in accordance with an embodiment of the present invention (Figure 1) and a side view of the air admittance valve 10 of Figure 1 in a first disassembled configuration (Figure 2). The air admittance valve 10 has housing 11 comprising a removable cap 12 connected by means of a screw thread 14 to a body portion 16. Snap fitted to the body portion 16 is a tubular portion 18, the tubular portion 18 having a further screw thread 20 for connecting to a plumbing system (not shown).

As can be seen most clearly from Figure 2, the air admittance valve also includes an air inlet 22. The removable cap 12 includes an air inlet grill 13 to cover the air inlet 22 and prevent debris from blocking and animals, such as mice, from nesting in the air inlet 22.

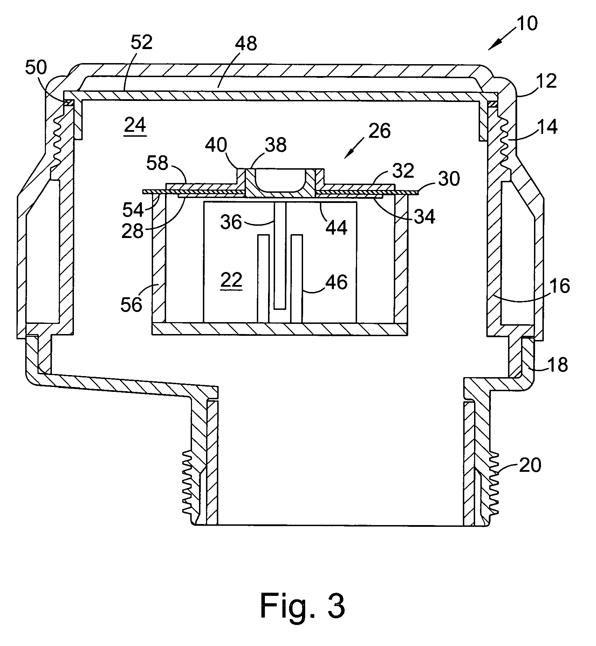

The internal features of the air admittance valve 10 can be seen on Figure 3, a cross-sectional side view of the air admittance valve 10 of Figure 1. The housing 11 defines an interior space 24. The air admittance valve further includes a seal element 26 which has a continuous lower surface 28 and is shown resting on a wall 56 defining a portion of the air inlet 22. The seal element comprises a seal membrane 30, an upper membrane support 32 and a lower membrane support 34.

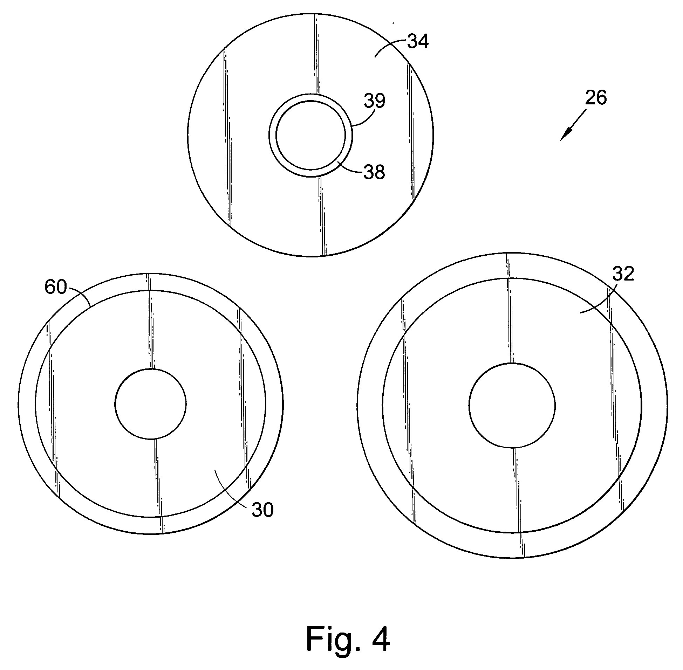

The constituent parts of the seal element 26 can also be seen on Figure 4, a top view of the seal element 26 of the air admittance valve 10 of Figure 1, in a first disassembled configuration. The seal membrane 30 is a flat annular disc, which has been cut from a sheet of rubber. The seal element 26 is assembled by placing the seal membrane 30 over the lower membrane support 34 so the lower membrane support collar 38 passes through the aperture in the centre of the seal membrane 30. The upper membrane support 32 is then placed over the top of the seal membrane 30, such that the external surface 39 of the lower membrane support collar 38 forms an interference fit with the internal surface 42 of an upper membrane support collar 40. The seal membrane 30 includes a seal interface 60, which, in use, forms a seal with a sealing lip 54 on the upper edge of the air inlet wall 56.

Returning to Figure 3, extending from the lower surface 44 of the lower membrane support 34 is a tongue 36. The tongue 36 is received by guide 46 located inside the air inlet 22 such that in normal use the effect of gravity will draw the seal element 26 towards the guide 46.

The air admittance valve 10 further includes a housing seal 48 comprising an annular seal member 50 mounted to a seal member support disc 52. The annular seal member 50 is a rubber seal.

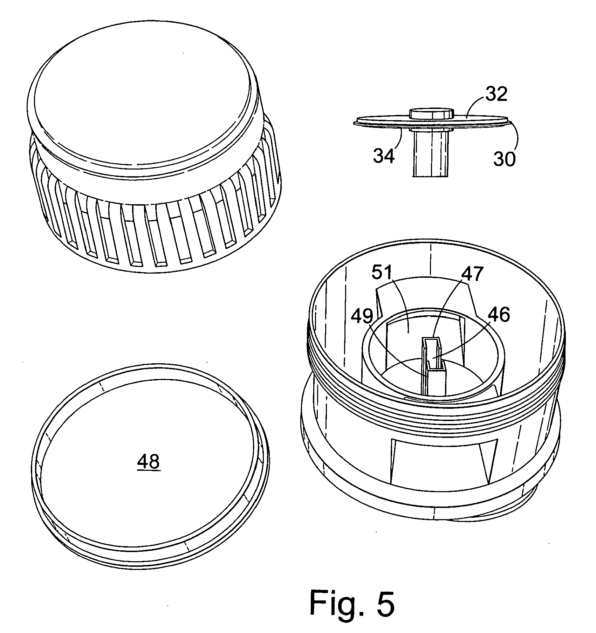

The housing seal 48 can also been seen in Figure 5 which is a perspective view of the air admittance valve 10 of Figure 1 in a second disassembled configuration. Figure 5 also shows the seal element guide 46 comprises a first u-shaped upstanding member 47 and a second u-shaped upstanding member 49, the u-shaped members 47,49 upstanding from the base 51 of the air inlet 22 and combining to define the rectangular guide 46.

Particularly, it can be seen from Figure 5 that the diameter of the seal membrane 30 is greater than the diameter of the upper membrane support 32, which in turn is greater than the diameter of the lower membrane support 34.

Referring back to Figure 3, the seal element 26 is shown in sealing position with the elastomer seal membrane 30 resting on the sealing lip 54 of the air inlet wall 56.

When the valve 10 is connected to the soil pipe of a plumbing drainage system, the seal element 26 opens and closes the air inlet 22 depending on the pressure differential across the seal element 26. When there is no differential pressure the seal element 26 rests on the sealing lip 54 of the air inlet wall 56 as shown in Figure 3. If a plumbing fixture connected to the plumbing drainage system (not shown) is drained causing a pressure drop within the plumbing drainage system, for example when a bath is emptied or a toilet is flushed, a negative pressure differential will exist across the seal element 26. This negative pressure differential will act over the continuous lower surface 28 of the seal element 26 causing the element 26 to lift away from the air inlet 22. As the seal element 26 lifts the tongue 36 moves towards the cap 12, within the guide 46. As the seal element 26 lifts, air can pass from the atmosphere through the air inlet 22 into the interior space 24, and into the plumbing drainage system through the tubular portion 18 to equalise the pressure. Once the pressure has balanced the seal element 26 will fall under the effect of gravity back to the position shown in Figure 3, assisted by guide 46.

If a positive pressure differential exists across the seal element 26, that is the pressure inside the interior space 24 is greater than the surrounding atmosphere, the pressure differential across the seal element 26 pushes the seal interface 60 into tighter engagement with the sealing lip 54 of the air intake wall 56. This improves the seal between the seal element 26 and the air intake 22 and prevents the sewer gases from exiting the soil pipe (not shown) and housing 11 into the atmosphere through air intake 22.

Thus, this embodiment of the present invention provides an air admittance valve which is responsive to low pressure differentials, can be designed and manufactured to suit the installation environment, can be easily disassembled and re-assembled for maintenance and is better suited to overcome the problems associated with subzero temperatures.

It will be understood that the foregoing is for illustrative purposes only, and that various modifications may be made to the air admittance valve described herein without departing from the scope of the invention. For example, reference is made to a disc shaped seal element, the seal element can be any suitable shape, such as square, oval, rectangular, crescent etc. The use of alternative shapes will allow the design and production of different shapes and styles of air admittance valve.

Furthermore, in the embodiment described, the elastomer seal provides a continuous lower seal surface, however the continuous lower seal surface could be provided by a combination of the elastomer seal and the seal support frame.

## Claims

1. An air admittance valve for a plumbing drainage system, the air admittance valve including:
a housing defining an interior space and having an air inlet for admitting air into the interior space, the housing adapted to be connected to a plumbing drainage system, such that the interior space is in fluid communication with the plumbing drainage system;
an air pressure actuated seal element for selectively sealing the air inlet; and
guide means for guiding the seal element into engagement with the air inlet, the guide means being arranged, in normal use, below the seal element.

2. The air admittance valve of claim 1, wherein the seal element has a continuous surface.

3. The air admittance valve of either of claims 1 or 2, wherein the seal element seals the air inlet by means of a single seal interface.

4. The air admittance valve of claim 3, wherein the single seal interface is located around the periphery of the seal element.

5. The air admittance valve of any preceding claim, wherein the air inlet is circular.

6. The air admittance valve of any preceding claim, wherein the seal element is normally closed by gravity.

7. The air admittance valve of any preceding claim, wherein the seal element is closed by a positive pressure differential.

8. The air admittance valve of any preceding claim, wherein the seal element comprises a seal membrane sandwiched between an upper membrane support and a lower membrane support.

9. The air admittance valve of claim 8, wherein the seal membrane and the upper and lower membrane supports are in the form of disks.

10. The air admittance valve of either of claims 8 or 9, wherein the diameter of the seal membrane is greater than the diameter of the upper membrane support which in turn is greater than the diameter of the lower membrane support.

11. The air admittance valve of any preceding claim, wherein the housing further comprises a body portion and a removable cap portion.

12. The air admittance valve of claim 11, wherein the removable cap portion is secured to the body portion by means of a screw fit.

13. The air admittance valve of either of claims 11 or 12, wherein the air admittance valve further includes a housing seal to provide a seal between the removable cap portion and the body portion.

14. The air admittance valve of claim 13, wherein the housing seal is located on the upper surface of the body portion and engages the underside of the removable cap.

15. The air admittance valve of either of claims 13 or 14, wherein the housing seal is in the form of an annular seal member mounted to a seal member support disc.

16. The air admittance valve of any of claims 13 to 15, wherein as the removable cap is screwed into position on the body portion, the housing seal is compressed between the underside of the removable cap and an upper surface of the body portion forming a compression seal.

17. The air admittance valve of any preceding claim, wherein the housing is adapted to be connected to a plumbing drainage system by means of a tubular portion having a longitudinal axis.

18. The air admittance valve of claim 17 when dependent on any of claims 11 to 16, wherein the housing comprises a body portion, the tubular portion may be disconnectable from the body portion.

19. The air admittance valve of claim 18, wherein the tubular portion is connected to the body portion by means of a snap fit.

20. The air admittance valve of claim 11, wherein the centre of the seal element is located on the longitudinal axis of the body portion.

21. The air admittance valve of either of claims 18 or 19, wherein the axis of the tubular portion coincides with the axis of the body portion.

22. The air admittance valve of either of claims 18 or 19, wherein the axis of the tubular portion is spaced away from the axis of the body portion.

23. The air admittance valve of any preceding claim, wherein the air inlet includes an external grill.

24. The air admittance valve of claim 11, wherein the air admittance valve includes a pipe seal portion for location between the tubular portion and the plumbing system.

25. The air admittance valve of claim 24, wherein the pipe seal includes an elastomer collar.

26. A plumbing drainage system, the system comprising:
at least one soil pipe;
at least one plumbing fixture connected to the at least one soil pipe by means of a water filled trap seal; and
at least one air admittance valve connected to the soil pipe, the air admittance valve including:
a housing defining an interior space and having an air inlet for admitting air into the interior space, the housing adapted to be connected to a plumbing drainage system, such that the interior space is in fluid communication with the plumbing drainage system;
an air pressure actuated seal element for selectively sealing the air inlet, the seal element having a continuous surface; and
guide means for assisting the seal element into sealing engagement with the air inlet, the guide means being located such that in normal use the effect of gravity will draw the seal element towards the guide means.
